(19) Europäisches Patentamt
European Patent Office
Office européen des brevets

(11) **EP 4 748 570 A1**

(12) **EUROPEAN PATENT APPLICATION**
published in accordance with Art. 153(4) EPC

(43) Date of publication:
**27.05.2026 Bulletin 2026/22**

(21) Application number: **24843201.5**

(22) Date of filing: **19.07.2024**

(51) International Patent Classification (IPC):
*B32B 27/32* (2006.01)   *B65D 30/02* (2006.01)
*B65D 65/40* (2006.01)   *B65D 81/24* (2006.01)

(52) Cooperative Patent Classification (CPC):
**B32B 27/32; B65D 29/00; B65D 65/40; B65D 81/24**

(86) International application number:
**PCT/JP2024/025959**

(87) International publication number:
**WO 2025/018413 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.07.2023 JP 2023117517**

(71) Applicant: **Toppan Holdings Inc.
Tokyo 110-0016 (JP)**

(72) Inventor: **OGIHARA, Yu
Tokyo 110-0016 (JP)**

(74) Representative: **Hoffmann Eitle
Patent- und Rechtsanwälte PartmbB
Arabellastraße 30
81925 München (DE)**

(54) **LAMINATE, PACKAGING BAG, AND PACKAGING**

(57)    A laminate having a laminate structure including a substrate layer, an intermediate layer and a sealant layer, laminated in this order, wherein maximum opening heights H1 and H2 measured through predetermined steps satisfy the following conditions, and a loop stiffness value after the laminate is heated at 128°C for 15 minutes is 80 mN or greater and 220 mN or less: 4 mm ≤ H1 6 mm ≤ H2

FIG.1

# EP 4 748 570 A1

**Description**

[Technical Field]

The present disclosure relates to laminates, packaging bags, and packages.

[Background Art]

Laminates are widely used mainly as packaging materials for foods, pharmaceuticals, and the like, and are subjected to heat sterilization such as boiling treatment and retort treatment. Known laminates have a biaxially stretched PET (polyethylene terephthalate) film, which is excellent in heat resistance and toughness, and a polyolefin film such as polyethylene or polypropylene as a sealant layer (for example, PTL 1).

[Citation List]

[Patent Literature]

PTL 1: JP 2017-178357 A

[Summary of Invention]

[Technical Problem]

It is desirable that packaging materials allow the contents contained therein to be easily discharged. Conventional laminates have room for improvement in terms of dischargeability.
In addition, it is desirable that packaging materials exhibit excellent handling properties when opened.
An aspect of the present disclosure provides a packaging bag and a package having excellent dischargeability and excellent handling properties when opened. Another aspect of the present disclosure provides a laminate useful for producing such packaging bags and packages.

[Solution to Problem]

In order to solve the above problems, the present disclosure provides a laminate, a packaging bag and a package as follows.

[1] A laminate having a laminate structure including a substrate layer,

an intermediate layer, and
a sealant layer, laminated in this order, wherein
maximum opening heights H1 and H2 measured through the following steps satisfy the following conditions:

$$4 \text{ mm} \leq \text{H1}$$

$$6 \text{ mm} \leq \text{H2}$$

the maximum opening heights H1 and H2 being measured through the following steps:

(1a) preparing two test pieces of the laminate having a width of 90 mm and a length of 140 mm;
(1b) overlapping the two test pieces with the sealant layers facing each other and sealing three sides with a 5 mm seal width to form a bag;
(1c) injecting 70 g of water from an upper end of the bag and then sealing the upper end with a 5 mm seal width to obtain a test specimen;
(1d) heating the test specimen under conditions of a temperature of 128°C, a time of 15 minutes and a pressure of 0.3 MPa;
(1e) cutting the bag, after step (1d), from one lateral edge to the other lateral edge at a first position 20 mm from the upper end of the bag, discharging the water, and measuring the maximum opening height H1 at the first position in a state in which the bag is placed on a horizontal table; and

2

(1f) cutting the bag, after step (1e), from one lateral edge to the other lateral edge at a second position 50 mm from the first position, and measuring the maximum opening height H2 at the second position in a state in which the bag is placed on a horizontal table, and

a loop stiffness value after the laminate is heated at 128°C for 15 minutes is 80 mN or greater and 220 mN or less.

[2] The laminate according to [1], wherein

when heated at 128°C for 15 minutes, an MD heat shrinkage ratio determined by the following formula (1) is 1.0% or greater and 3.0% or less, and a TD heat shrinkage ratio determined by the following formula (2) is 1.0% or greater and 3.0% or less:

$$\text{MD heat shrinkage ratio (\%)} = (\text{MD length before heating - MD length after heating}) / \text{MD length before heating} \times 100 \tag{1}$$

$$\text{TD heat shrinkage ratio (\%)} = (\text{TD length before heating - TD length after heating}) / \text{TD length before heating} \times 100 \tag{2}$$

[3] The laminate according to [1] or [2], wherein

when heated at 128°C for 15 minutes, the sealant layer thermally expands in the MD and thermally contracts in the TD.

[4] The laminate according to any of [1] to [3], wherein

when an MD heat shrinkage ratio determined by the following formula (1) and a TD heat shrinkage ratio determined by the following formula (2), after the substrate layer is heated at 128°C for 15 minutes, are $S1_{MD}$ and $S1_{TD}$, respectively, a difference $(S1_{MD} - S1_{TD})$ between $S1_{MD}$ and $S1_{TD}$ is greater than 0% and 5% or less:

$$\text{MD heat shrinkage ratio (\%)} = (\text{MD length before heating - MD length after heating}) / \text{MD length before heating} \times 100 \tag{1}$$

$$\text{TD heat shrinkage ratio (\%)} = (\text{TD length before heating - TD length after heating}) / \text{TD length before heating} \times 100 \tag{2}$$

[5] The laminate according to any of [1] to [4], wherein

the intermediate layer has a second substrate layer, and when an MD heat shrinkage ratio determined by the following formula (1) and a TD heat shrinkage ratio determined by the following formula (2), after the second substrate layer is heated at 128°C for 15 minutes, are $S2_{MD}$ and $S2_{TD}$, respectively, a difference $(S2_{MD} - S2_{TD})$ between $S2_{MD}$ and $S2_{TD}$ is greater than 0% and 5% or less:

$$\text{MD heat shrinkage ratio (\%)} = (\text{MD length before heating - MD length after heating}) / \text{MD length before heating} \times 100 \tag{1}$$

$$\text{TD heat shrinkage ratio (\%)} = (\text{TD length before heating - TD length after heating}) / \text{TD length before heating} \times 100 \tag{2}$$

[6] The laminate according to any of [1] to [5], wherein

the maximum opening heights H1 and H2 satisfy the following conditions:

$$4 \text{ mm} \leq H1 \leq 7 \text{ mm}$$

$$6 \text{ mm} \leq H2 \leq 9 \text{ mm}$$

[7] The laminate according to any of [1] to [6], wherein

the substrate layer, the intermediate layer and the sealant layer each contain a polypropylene-based resin, and a total mass content of the polypropylene-based resin in the laminate is 90 mass% or greater.

[8] A packaging bag produced using the laminate according to any of [1] to [7].

[9] The packaging bag according to any of [1] to [8], which is used for applications requiring heat treatment at 120°C or higher.

[10] A package including a packaging bag, and

contents contained in the packaging bag, wherein
the packaging bag is formed using a laminate,
the laminate having a laminate structure including a substrate layer, an intermediate layer and a sealant layer, laminated in this order, and
maximum opening heights H1 and H2 measured through the following steps satisfy the following conditions:

$$4 \text{ mm} \leq H1$$

$$6 \text{ mm} \leq H2$$

the maximum opening heights H1 and H2 being measured through the following steps:

(2a) setting a position 20 mm from an upper end of the packaging bag as a first position and a position at a center in the height direction of the packaging bag as a second position, cutting the packaging bag from one lateral edge to the other lateral edge at the first position, discharging the contents, and measuring the maximum opening height H1 at the first position in a state in which the packaging bag is placed on a horizontal table; and
(2b) cutting the packaging bag, after step (2a), from one lateral edge to the other lateral edge at the second position, and measuring the maximum opening height H2 at the second position in a state in which the packaging bag is placed on a horizontal table, and

a loop stiffness value after the laminate is heated at 128°C for 15 minutes is 80 mN or greater and 220 mN or less.

[Advantageous Effects of Invention]

An aspect of the present disclosure provides a packaging bag and a package having excellent dischargeability and excellent handling properties when opened. Another aspect of the present disclosure provides a laminate useful for producing such packaging bags and packages.

[Brief Description of Drawings]

Fig. 1 is a schematic cross-sectional view illustrating a laminate according to an embodiment.
Fig. 2 is a schematic plan view of an example of a package.
Fig. 3 is a cross-sectional view taken along the imaginary line I-I of Fig. 2.
Fig. 4 is a schematic view illustrating a method of measuring a thermal shrinkage ratio during heating.

[Description of Embodiments]

Some embodiments of the present disclosure will be described below. The same components are denoted by the same reference signs, and repeated description is omitted. Further, the dimensional ratios in the drawings are not limited to those shown in the drawings.

<Laminate>

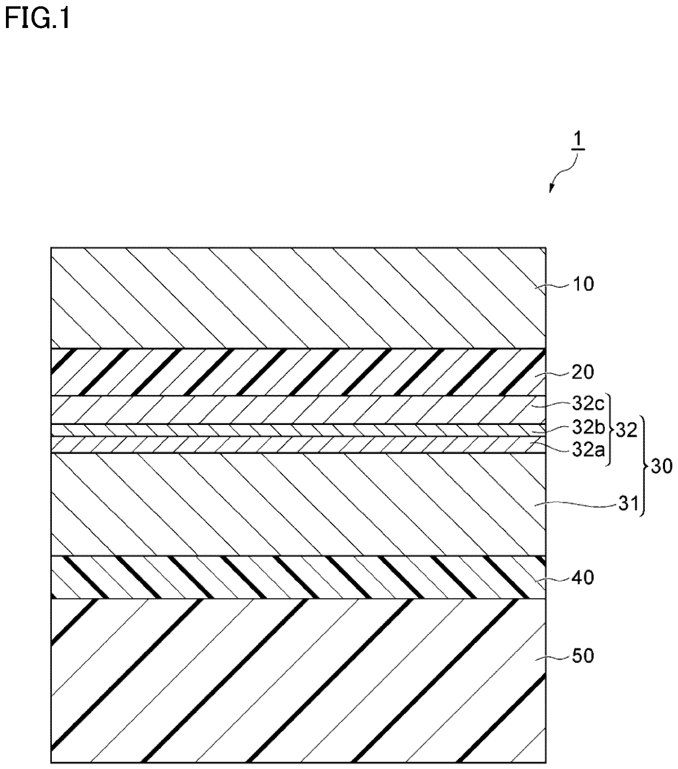

A laminate according to an embodiment will be described below. Fig. 1 is a schematic cross-sectional view illustrating a laminate according to the present embodiment. A laminate 1 has a laminate structure including a first substrate layer 10, a first adhesive layer 20, an intermediate layer 30, a second adhesive layer 40 and a sealant layer 50, laminated in this order. Maximum opening heights H1 and H2 measured through the following steps (1a) to (1f) satisfy the following conditions. When the maximum opening heights H1 and H2 satisfy the following conditions, the opening of the packaging bag obtained using the laminate 1 becomes difficult to close when discharging the contents with the opening positioned vertically downward. Therefore, the packaging bag has excellent dischargeability even without providing asperities on the surface of the sealant layer (innermost layer) of the laminate 1 by additional processing or the like to promote discharge of the contents.

$$4 \text{ mm} \leq H1$$

$$6 \text{ mm} \leq H2$$

(1a) Preparing two test pieces of the laminate having a width of 90 mm and a length of 140 mm
(1b) Overlapping the two test pieces with the sealant layers facing each other and sealing three sides with a 5 mm seal width to form a bag
(1c) Injecting 70g of water from the upper end of the bag and then sealing the upper end with a 5 mm seal width to obtain a test specimen
(1d) Heating the test specimen under conditions of a temperature of 128°C, a time of 15 minutes and a pressure of 0.3 MPa
(1e) Cutting the bag, after step (1d), from one lateral edge to the other lateral edge at a first position 20 mm from the upper end of the bag, discharging the water, and measuring the maximum opening height H1 at the first position in a state in which the bag is placed on a horizontal table
(1f) Cutting the bag, after step (1e), from one lateral edge to the other lateral edge at a second position 50 mm from the first position, and measuring the maximum opening height H2 at the second position in a state in which the bag is placed on a horizontal table

The maximum opening heights H1 and H2 are maximum distances between the inner edges of the sealant layers.
The maximum opening height H1 is preferably 4.3 mm or greater, and more preferably 5.0 mm or greater from the viewpoint of further improving dischargeability. The maximum opening height H1 may be 7.0 mm or less. The maximum opening height H1 may be 4 mm or greater and 7.0 mm or less, 4.3 mm or greater and 7.0 mm or less, or 5.0 mm or greater and 7.0 mm or less.
The maximum opening height H2 is preferably 6.3 mm or greater, and more preferably 7.0 mm or greater from the viewpoint of facilitating air entry throughout the main body of the packaging bag, and further improving the ease of release of the contents located at the four corners of the main body. The maximum opening height H2 may be 9.0 mm or less. The maximum opening height H2 may be 6.0 mm or greater and 9.0 mm or less, 6.3 mm or greater and 9.0 mm or less, or 7.0 mm or greater and 9.0 mm or less.
The maximum opening heights H1 and H2 may be changed, for example, by adjusting the heat shrinkage ratios of the first substrate layer and the second substrate layer.
When the laminate 1 is heated at 128°C for 15 minutes, the MD heat shrinkage ratio determined by the above formula (1) is preferably 1.0% or greater, and more preferably 1.8% or greater from the viewpoint of achieving sufficient opening of the obtained packaging bag and further improving dischargeability. When the laminate 1 is heated at 128°C for 15 minutes, the MD heat shrinkage ratio determined by the above formula (1) is preferably 3.0% or less from the viewpoint of suppressing poor appearance and transport defects. When the laminate 1 is heated at 128°C for 15 minutes, the MD heat shrinkage ratio determined by the above formula (1) may be 1.0% or greater and 3.0% or less, or 1.8% or greater and 3.0% or less.
When the laminate 1 is heated at 128°C for 15 minutes, the TD heat shrinkage ratio determined by the above formula (2) is preferably 1.0% or greater, and more preferably 1.8% or greater from the viewpoint of achieving sufficient opening of the obtained packaging bag and further improving dischargeability. When the laminate 1 is heated at 128°C for 15 minutes, the TD heat shrinkage ratio determined by the above formula (2) is preferably 3.0% or less from the viewpoint of suppressing poor appearance and transport defects due to shrinkage during bag production. When the laminate 1 is heated at 128°C for 15 minutes, the TD heat shrinkage ratio determined by the above formula (2) may be 1.0% or greater and 3.0% or less, or 1.8% or greater and 3.0% or less.

$$\text{MD heat shrinkage ratio (\%)} = (\text{MD length before heating} - \text{MD length after heating}) / \text{MD length before heating} \times 100 \quad (1)$$

$$\text{TD heat shrinkage ratio (\%)} = (\text{TD length before heating} - \text{TD length after heating}) / \text{TD length before heating} \times 100 \quad (2)$$

MD is the machine direction of the substrate layer and the sealant layer, and TD is the transverse direction. The orientation angle of the film can be measured using, for example, a phase difference measurement device (trade name: KOBRA, manufactured by Oji Scientific Instruments Co., Ltd.), and the MD and TD can be distinguished from the orientation angle. For example, when the film is a sequentially biaxially stretched polypropylene film, the direction in which the molecular chains are oriented is considered to be TD.

The loop stiffness value after the laminate 1 is heated at 128°C for 15 minutes is preferably 80 mN or greater, and more preferably 90 mN or greater, and is preferably 220 mN or less, more preferably 170 mN or less, even more preferably 150 mN or less, still even more preferably 130 mN or less, and particularly preferably 105 mN or less. When the loop stiffness value is within the above ranges, the packaging bag has excellent handling properties when opened. When the loop stiffness value is 80 mN or greater, the packaging bag can be easily opened and maintained in the opened shape since it is less likely to be distorted (twisted) when discharging the contents by pinching both sides of the packaging bag and pressing toward the center of the packaging bag. Therefore, the packaging bag tends to have further improved dischargeability. When the loop stiffness value is 150 mN or less, it becomes easier to pinch both sides of the packaging bag with both hands and press them toward the center of the packaging bag. Therefore, the packaging bag can be stably and easily opened and tends to have further improved dischargeability. Further, the packaging bag can be easily opened with a light force, and the opened shape can be easily maintained. The loop stiffness value after the laminate 1 is heated at 128°C for 15 minutes may be 80 mN or greater and 220 mN or less, 80 mN or greater and 170 mN or less, 80 mN or greater and 150 mN or less, 80 mN or greater and 130 mN or less, 80 mN or greater and 105 mN or less, 90 mN or greater and 220 mN or less, 90 mN or greater and 170 mN or less, 90 mN or greater and 150 mN or less, 90 mN or greater and 130 mN or less, or 90 mN or greater and 105 mN or less. The loop stiffness value can be measured by the method described in the examples below.

The loop stiffness value is a physical property that indicates the stiffness of a film. The loop stiffness value increases to some extent by thermal contraction after heating, but can be adjusted by the film thickness of the laminate and the crystallinity and Young's modulus of each layer. The greater the film thickness, the greater the loop stiffness value tends to be. The higher the crystallinity, the greater the loop stiffness value tends to be. The higher the Young's modulus, the greater the loop stiffness value tends to be. Conversely, the smaller the film thickness, the smaller the loop stiffness value tends to be. The smaller the crystallinity, the smaller the loop stiffness value tends to be. The smaller the Young's modulus, the smaller the loop stiffness value tends to be.

The total mass content of the polypropylene-based resin in the laminate 1 is preferably 90 mass% or greater relative to the total amount of the laminate 1 since the laminate 1 becomes a packaging material made of a single material (monomaterial) and has excellent recyclability. The polypropylene-based resin content in the laminate 1 may be 92.5 mass% or greater, or 95 mass% or greater relative to the total amount of the laminate 1.

The following describes the details of each layer of the laminate 1.

[First Substrate Layer 10]

The first substrate layer 10 is a plastic member that functions as the outermost layer of the laminate 1. The thickness of the first substrate layer 10 is not specifically limited. The thickness can be 6 μm to 200 μm depending on the application, but may be 9 μm to 50 μm, 12 μm to 38 μm, 18 μm to 30 μm, or 15 μm to 30 μm from the perspective of reducing materials to lower environmental impact and achieving excellent heat resistance and impact resistance and excellent gas barrier properties.

The first substrate layer 10 may be, for example, a polyolefin film from the viewpoint of recyclability of the laminate 1. The first substrate layer 10 may include a polypropylene film or may be formed of a polypropylene film. The polypropylene film may be an acid-modified polypropylene film obtained by graft-modifying polypropylene with an unsaturated carboxylic acid, an acid anhydride of an unsaturated carboxylic acid, an ester of an unsaturated carboxylic acid, or the like. Examples of the polypropylene that can be used include polypropylene-based resins such as homopolypropylene resins (PP), propylene-ethylene random copolymers, propylene-ethylene block copolymers and propylene-α olefin copolymers.

Various additives, such as flame retardants, slip agents, anti-blocking agents, antioxidants, photostabilizers, tackifiers and antistatic agents, may be added to the polypropylene film constituting the first substrate layer 10.

The polypropylene film constituting the first substrate layer 10 may be a stretched film or a non-stretched film. The polypropylene film is preferably a stretched polypropylene film since it is more excellent in dischargeability.

When the first substrate layer is heated at 128°C for 15 minutes, the MD heat shrinkage ratio determined by the above formula (1) is preferably 2.0% or greater, more preferably 3.0% or greater, and even more preferably 4.0% or greater from the viewpoint of further improving dischargeability. The MD heat shrinkage ratio may be 5.0% or less from the viewpoint of handling properties when the packaging bag is opened.

When the first substrate layer is heated at 128°C for 15 minutes, the TD heat shrinkage ratio determined by the above formula (2) is preferably greater than 0%, more preferably 1.0% or greater, and even more preferably 2.0% or greater from the viewpoint of further improving dischargeability. The TD heat shrinkage ratio may be 3.0% or less from the viewpoint of handling properties when the packaging bag is opened.

When the MD heat shrinkage ratio determined by the above formula (1) and the TD heat shrinkage ratio determined by the above formula (2), after the first substrate layer is heated at 128°C for 15 minutes, are $S1_{MD}$ and $S1_{TD}$, respectively, the difference ($S1_{MD} - S1_{TD}$) between $S1_{MD}$ and $S1_{TD}$ is preferably greater than 0%, more preferably 1% or greater, and even more preferably 1.5% or greater from the viewpoint of easily increasing the opening height and further improving dischargeability, and is preferably 5% or less, more preferably 4% or less, and even more preferably 3% or less from the viewpoint of suppressing distortion of the packaging bag that may cause packaging failure of the packaging bag. The difference ($S1_{MD} - S1_{TD}$) between $S1_{MD}$ and $S1_{TD}$ may be greater than 0% and 5% or less, greater than 0% and 4% or less, greater than 0% and 3% or less, 1% or greater and 5% or less, 1% or greater and 4% or less, 1% or greater and 3% or less, 1.5% or greater and 5% or less, 1.5% or greater and 4% or less, or 1.5% or greater and 3% or less.

When the MD heat shrinkage ratio determined by the above formula (1) after the first substrate layer is heated at 128°C for 15 minutes is $S1_{MD}$, and the MD heat shrinkage ratio determined by the above formula (1) after the second substrate layer is heated at 128°C for 15 minutes is $S2_{MD}$, the difference ($S1_{MD} - S2_{MD}$) between $S1_{MD}$ and $S2_{MD}$ is preferably greater than 0%, more preferably 0.25% or greater, and even more preferably 0.5% or greater from the viewpoint of easily increasing the opening height and further improving dischargeability, and is preferably 2.5% or less, more preferably 2.0% or less, and even more preferably 1.0% or less from the viewpoint of suppressing occurrence of cracking in the gas barrier layer due to differences in shrinkage of the substrate.

When the TD heat shrinkage ratio determined by the above formula (2) after the first substrate layer is heated at 128°C for 15 minutes is $S1_{TD}$, and the TD heat shrinkage ratio determined by the above formula (2) after the second substrate layer is heated at 128°C for 15 minutes is $S2_{TD}$, the difference ($S1_{TD} - S2_{TD}$) between $S1_{TD}$ and $S2_{TD}$ is preferably greater than 0%, more preferably 0.3% or greater, and more preferably 0.4% or greater from the viewpoint of easily increasing the opening height and further improving dischargeability, and is preferably 2.0% or less, more preferably 1.5% or less, and even more preferably 1.0% or less from the viewpoint of suppressing occurrence of cracking in the gas barrier layer due to differences in shrinkage of the substrate.

The lamination surface of the first substrate layer 10 may be subjected to various types of pretreatment such as corona treatment, plasma treatment and flame treatment, or may be provided with a coating layer such as an adhesion-enhancement layer.

[First Adhesive Layer 20 and Second Adhesive Layer 40]

The first adhesive layer 20 is a layer member that bonds the first substrate layer 10 to the intermediate layer 30. The second adhesive layer 40 is a layer member that bonds the intermediate layer 30 to the sealant layer 50. The adhesive material contained in the first adhesive layer 20 and the second adhesive layer 40 may be, for example, polyester-isocyanate-based resin, urethane resin, polyether-based resin, or the like. When the packaging bag is used for retort applications, two-part curing type urethane-based adhesive having retort treatment resistance can be preferably used. From an environmental perspective, the adhesive may not necessarily contain 3-glycidyloxypropyltrimethoxysilane (GPTMS). The first adhesive layer 20 and the second adhesive layer 40 may not necessarily contain chlorine. In this case, the first adhesive layer 20 and the second adhesive layer 40 can suppress coloring of the recycled resin after recycling and generation of odor due to heat treatment. From an environmental perspective, the first adhesive layer 20 and the second adhesive layer 40 may be made of a biomass material or may not contain a solvent.

The urethane-based adhesive contains a polyol and a polyisocyanate. When a urethane-based adhesive is used, the first adhesive layer 20 and the second adhesive layer 40 may contain polyurethane obtained by curing the urethane-based adhesive, or may contain an uncured urethane-based adhesive.

The polyol contains two or more hydroxyl groups per molecule. The polyisocyanate contains two or more isocyanate groups per molecule. The polyol and polyisocyanate may react as a base resin and a curing agent, respectively, to produce polyurethane.

The polyol may contain at least one selected from the group consisting of polyester polyols and polyether polyols.

The polyisocyanates may be used singly or in combination of two or more. Examples of the polyisocyanates include aliphatic polyisocyanate compounds, alicyclic polyisocyanate compounds and aromatic polyisocyanate compounds.

The first adhesive layer 20 has a thickness of, for example, 0.5 $\mu$m or greater and 10 $\mu$m or less. When the thickness of the first adhesive layer 20 is 0.5 $\mu$m or greater, delamination between the first substrate layer 10 and the intermediate layer 30 can be effectively suppressed. When the thickness of the first adhesive layer 20 is 10 $\mu$m or less, the laminate 1 can be easily monomaterialized. The thickness of the first adhesive layer 20 may be 1 $\mu$m or greater, or 2 $\mu$m or greater, and may be 8 $\mu$m or less, 6 $\mu$m or less, or 5 $\mu$m or less.

The second adhesive layer 40 has a thickness of, for example, 0.5 $\mu$m or greater and 10 $\mu$m or less. When the thickness of the second adhesive layer 40 is 0.5 $\mu$m or greater, delamination between the intermediate layer 30 and the sealant layer 50 can be effectively suppressed. When the thickness of the second adhesive layer 40 is 10 $\mu$m or less, the

laminate 1 can be easily monomaterialized. The thickness of the first adhesive layer 20 may be 1 $\mu$m or greater, or 2 $\mu$m or greater, and may be 8 $\mu$m or less, 6 $\mu$m or less, or 5 $\mu$m or less.

[Intermediate Layer 30]

As shown in Fig. 1, the intermediate layer 30 includes a second substrate layer 31 and a gas barrier layer 32. The gas barrier layer 32 exhibits gas barrier properties against gases such as water vapor and oxygen. The gas barrier layer 32 includes an anchor coat layer 32a, a vapor deposition layer 32b and a barrier coating layer 32c in this order from the second substrate layer 31 side.

The thickness of the intermediate layer may be similar to that of the first substrate layer 10.

(Second Substrate Layer 31)

The thickness of the second substrate layer 31 may be similar to that of the first substrate layer 10. The second substrate layer 31 may be, for example, a polyolefin film from the viewpoint of recyclability of the laminate 1. The second substrate layer 31 may include a polypropylene film or may be formed of a polypropylene film. The polypropylene film may be similar to that used for the first substrate layer 10. The polypropylene film may contain various additives similar to those for the first substrate layer 10. When the second substrate layer 31 contains an anti-blocking agent, the addition of the anti-blocking agent may be suppressed in order to improve the smoothness of the surface on which the vapor deposition layer 32b is provided. The second substrate layer 31 may be subjected to various types of pretreatment similar to those for the first substrate layer 10, or may be provided with a coating layer.

When the second substrate layer is heated at 128°C for 15 minutes, the MD heat shrinkage ratio determined by the above formula (1) is preferably 1.0% or greater, more preferably 2.0% or greater, and even more preferably 3.0% or greater from the viewpoint of further improving dischargeability. The MD heat shrinkage ratio may be 5.0% or less from the viewpoint of handling properties when the packaging bag is opened.

When the second substrate layer is heated at 128°C for 15 minutes, the TD heat shrinkage ratio determined by the above formula (2) is preferably greater than 0%, more preferably 1.0% or greater, and even more preferably 2.0% or greater from the viewpoint of further improving dischargeability. The TD heat shrinkage ratio may be 3.0% or less from the viewpoint of handling properties when the packaging bag is opened.

When the MD heat shrinkage ratio determined by the above formula (1) and the TD heat shrinkage ratio determined by the above formula (2), after the second substrate layer is heated at 128°C for 15 minutes, are $S2_{MD}$ and $S2_{TD}$, respectively, the difference ($S2_{MD}$ - $S2_{TD}$) between $S2_{MD}$ and $S2_{TD}$ is preferably greater than 0%, more preferably 1% or greater, and even more preferably 1.5% or greater from the viewpoint of easily increasing the opening height and further improving dischargeability, and is preferably 5% or less, more preferably 4% or less, and even more preferably 3% or less from the viewpoint of suppressing distortion of the packaging bag that may cause packaging failure of the packaging bag. The difference ($S2_{MD}$ - $S2_{TD}$) between $S2_{MD}$ and $S2_{TD}$ may be greater than 0% and 5% or less, greater than 0% and 4% or less, greater than 0% and 3% or less, 1% or greater and 5% or less, 1% or greater and 4% or less, 1% or greater and 3% or less, 1.5% or greater and 5% or less, 1.5% or greater and 4% or less, or 1.5% or greater and 3% or less.

(Anchor Coat Layer 32a)

The anchor coat layer 32a functions as a layer that can improve the adhesion performance of the vapor deposition layer 32b on the second substrate layer 31, and is provided directly on the second substrate layer 31. Therefore, the anchor coat layer 32a is disposed between the second substrate layer 31 and the vapor deposition layer 32b. Providing the anchor coat layer 32a can improve the smoothness of the surface of the intermediate layer 30 on which the vapor deposition layer 32b is provided. By improving the smoothness, the vapor deposition layer 32b can be easily formed uniformly without defects, exhibiting high barrier properties. The anchor coat layer 32a can be formed, for example, using an anchor coating agent.

The anchor coating agent is preferably a urethane resin. Examples of the urethane resin include polyester-based polyurethane resins, polyether-based polyurethane resins and acrylic-based polyurethane resins. From the viewpoint of heat resistance and interlayer adhesion strength, polyester-based polyurethane resins and acrylic-based polyurethane resins are preferred as the anchor coating agent. In particular, for packaging materials that undergo boiling or retort treatment, acrylic-based polyurethane resins are more preferred as the anchor coating agent.

The thickness of the anchor coat layer 32a is not particularly limited, but is preferably in the range of 0.01 $\mu$m to 5 $\mu$m, more preferably in the range of 0.03 $\mu$m to 3 $\mu$m, and particularly preferably in the range of 0.05 $\mu$m to 2 $\mu$m. When the thickness of the anchor coat layer 32a is greater than or equal to the lower limit, sufficient interlayer adhesion strength tends to be achieved, and when the thickness is less than or equal to the upper limit, desired gas barrier properties tend to be achieved.

The method for coating the anchor coat layer 32a onto the second substrate layer 31 may be any known coating method without particular restriction, and examples thereof include an immersion (dipping) method and methods that use a sprayer, a coater, a printer, a brush, and the like. In addition, examples of the types of coaters and printers used in these methods, and the coating methods thereof include a gravure coater, a reverse-roll coater, a micro gravure coater, a chamber doctor coater, an air-knife coater, a dip coater, a bar coater, a comma coater, a die coater, and the like for a direct gravure method, a reverse gravure method, a kiss reverse gravure method, an offset gravure method, and the like.

As the coating amount of the anchor coat layer 32a, the mass per $m^2$ of the dry amount of the anchor coating agent is preferably 0.01 to 5 $g/m^2$, and more preferably 0.03 to 3 $g/m^2$. When the mass per $m^2$ of the dry amount of the anchor coating agent is greater than or equal to the lower limit, sufficient film formation tends to be achieved, and when the dry amount of the anchor coating agent is less than or equal to the upper limit, the anchor coating agent tends to be sufficiently dried with little residual solvent.

A method of drying the anchor coat layer 32a may be, but is not limited to, natural drying, drying in an oven set at a predetermined temperature, or drying using a dryer attached to the coater described above, such as an arch dryer, a floating dryer, a drum dryer or an infrared dryer. The drying conditions can be appropriately selected depending on the drying method, and for example, in a method of drying in an oven, it is preferred to dry at a temperature of 60°C to 100°C for approximately 1 second to 2 minutes.

The anchor coat layer 32a may use a polyvinyl alcohol-based resin instead of the polyurethane resin. The polyvinyl alcohol-based resin may be one having vinyl alcohol units obtained by saponifying vinyl ester units, and for example, polyvinyl alcohol (PVA) or ethylenevinyl alcohol copolymer (EVOH) can be used.

Examples of the PVA include resins obtained by polymerizing a vinyl ester alone, such as vinyl acetate, vinyl formate, vinyl propionate, vinyl valerate, vinyl caprate, vinyl laurate, vinyl stearate, vinyl pivalate, or vinyl versatate, and then saponifying the resulting product. The PVA may also be a modified PVA obtained by copolymerization modification or post-modification. The modified PVA may be obtained by, for example, copolymerizing a vinyl ester and an unsaturated monomer copolymerizable with the vinyl ester, and then saponifying the resulting product. Examples of the unsaturated monomer copolymerizable with the vinyl ester include: olefins such as ethylene, propylene, isobutylene, $\alpha$-octene, $\alpha$-dodecene and $\alpha$-octadecene; hydroxy group-containing $\alpha$-olefins such as 3-buten-1-ol, 4-pentyn-1-ol and 5-hexen-1-ol; unsaturated acids such as acrylic acid, methacrylic acid, crotonic acid, maleic acid, maleic anhydride, itaconic acid and undecylenic acid; nitriles such as acrylonitrile and methacrylonitrile; amides such as diacetone acrylamide, acrylamide and methacrylamide; olefin sulfonic acids such as ethylene sulfonic acid, allyl sulfonic acid and methallyl sulfonic acid; vinyl compounds such as alkyl vinyl ether, dimethyl allyl vinyl ketone, N-vinylpyrrolidone, vinyl chloride, vinyl ethylene carbonate, 2,2-dialkyl-4-vinyl-1,3-dioxolane, glycerin monoallyl ether and 3,4-diacetoxy-1-butene; vinylidene chloride, 1,4-diacetoxy-2-butene and vinylene carbonate.

The degree of polymerization of PVA is preferably 300 to 3000. When the degree of polymerization is lower than 300, the barrier properties tend to decrease, and when the degree of polymerization is over 3000, coating suitability tends to decrease due to the viscosity being too high. The degree of saponification of PVA is preferably 90 mol% or greater, more preferably 95 mol% or greater, and even more preferably 99 mol% or greater. Further, the degree of saponification of PVA may be 100 mol% or less, or may be 99.9 mol% or less. The degree of polymerization and degree of saponification of PVA can be determined according to the method described in JIS K 6726 (1994).

In general, EVOH is obtained by saponifying a copolymer of ethylene and an acid vinyl ester such as vinyl acetate, vinyl formate, vinyl propionate, vinyl valerate, vinyl caprate, vinyl laurate, vinyl stearate, vinyl pivalate or vinyl versatate.

The degree of polymerization of EVOH is preferably 300 to 3000. When the degree of polymerization is lower than 300, the barrier properties tend to decrease, and when the degree of polymerization is over 3000, coating suitability tends to decrease due to the viscosity being too high. The degree of saponification of the vinyl ester component of EVOH is preferably 90 mol% or greater, more preferably 95 mol% or greater, and even more preferably 99 mol% or more. Further, the degree of saponification of EVOH may be 100 mol% or less, or may be 99.9 mol% or less. The degree of saponification of EVOH is determined from the peak area of hydrogen atoms in the vinyl ester structure and the peak area of hydrogen atoms in the vinyl alcohol structure by performing nuclear magnetic resonance (1H-NMR) measurement.

The ethylene unit content of EVOH may be 10 mol% or greater, preferably 15 mol% or greater, more preferably 20 mol% or greater, and particularly preferably 25 mol% or greater. Further, the ethylene unit content of EVOH is preferably 65 mol% or less, more preferably 55 mol% or less, and even more preferably 50 mol% or less. When the ethylene unit content is 10 mol% or greater, it can maintain good gas barrier properties or dimensional stability under high humidity. On the other hand, when the ethylene unit content is 65 mol% or less, gas barrier properties can be enhanced. The ethylene unit content of EVOH can be determined by an NMR method.

When a polyvinyl alcohol-based resin is used as the anchor coat layer 32a, examples of the method for forming the anchor coat layer 32a include coating using a polyvinyl alcohol-based resin solution, multilayer extrusion, and the like.

(Vapor Deposition Layer 32b)

The vapor deposition layer 32b is a layer (gas barrier layer) that exhibits gas barrier properties against water vapor and oxygen, and contains at least one of a metal and an inorganic oxide. The vapor deposition layer 32b is provided directly on the anchor coat layer 32a. The vapor deposition layer 32b may have a single layer structure or a multilayer structure. Accordingly, the vapor deposition layer 32b contains at least one of a metal vapor deposition layer and an inorganic oxide layer. When the vapor deposition layer 32b includes a metal vapor deposition layer, examples of the metal contained in the metal vapor deposition layer include aluminum and stainless steel. When the vapor deposition layer 32b includes an inorganic oxide layer, examples of the inorganic oxide contained in the inorganic oxide layer include aluminum oxide, silicon oxide, magnesium oxide and tin oxide. The inorganic oxide may be selected from the group consisting of aluminum oxide, silicon oxide and magnesium oxide from the viewpoint of transparency and barrier properties. Further, the inorganic oxide layer is preferably a layer using silicon oxide from the viewpoint of excellent tensile stretchability during processing. By using the inorganic oxide layer, high barrier properties can be achieved with a very thin layer that does not affect the recyclability of the laminate 1.

When the vapor deposition layer 32b is an inorganic oxide layer using silicon oxide, the O/Si ratio of the inorganic oxide layer is preferably 1.7 or greater. When the O/Si ratio is 1.7 or greater, the content of metallic Si is suppressed, and good transparency can be easily achieved. Further, the O/Si ratio is preferably 2.0 or less. When the O/Si ratio is 2.0 or less, the inorganic oxide layer can be prevented from becoming too hard due to increased crystallinity of SiO, and good tensile resistance can be achieved. This prevents occurrence of cracking in the inorganic oxide layer when the barrier coating layer 32c is laminated. Further, although the first substrate layer 10 may contract due to heat during boiling or retort treatment even after being formed into a packaging bag, the inorganic oxide layer easily follows the contraction when the O/Si ratio is 2.0 or less, and deterioration of the barrier properties can be suppressed. From the viewpoint of fully achieving these effects, the O/Si ratio of the inorganic oxide layer is preferably 1.75 or greater and 1.9 or less, and more preferably 1.8 or greater and 1.85 or less.

When the vapor deposition layer 32b is an inorganic oxide layer using silicon oxide, the O/Si ratio of the inorganic oxide layer can be determined by X-ray photoelectron spectroscopy (XPS). For example, an X-ray photoelectron spectrometer (manufactured by JEOL Ltd., trade name: JPS-90MXV) can be used as a measurement device, using a nonmonochromatic MgK$\alpha$ (1253.6 eV) X-ray source, with an X-ray output of 100 W (10kV-10mA). For quantitative analysis to determine the O/Si ratio, relative sensitivity factors of 2.28 for O1s and 0.9 for Si2p can be used.

The thickness of the vapor deposition layer 32b may be, for example, 5 nm or greater and 80 $\mu$m or less. When the thickness of the vapor deposition layer 32b is 5 nm or greater, sufficient water vapor barrier properties can be achieved. Further, when the thickness of the vapor deposition layer 32b is 80 nm or less, occurrence of cracking caused by deformation due to internal stress in the thin film can be suppressed, and deterioration of water vapor barrier properties can be suppressed. In addition, when the thickness of the vapor deposition layer 32b exceeds 80 nm, costs tend to increase due to an increase in the amount of materials used, an increase in the film formation time, and the like, which is not preferred from an economic viewpoint. From the same viewpoint as above, the thickness of the vapor deposition layer 32b may be 20 nm or greater and 40 nm or less.

The vapor deposition layer 32b can be formed by, for example, vacuum deposition. In vacuum film formation, a physical vapor deposition method or a chemical vapor deposition method can be used. Examples of the physical vapor deposition include, but are not limited to, vacuum vapor deposition, sputtering and ion plating. Examples of the chemical vapor deposition include, but are not limited to, thermal CVD, plasma CVD and photo CVD.

Specifically, resistance heating vacuum vapor deposition, electron beam (EB) heating vacuum vapor deposition, induction heating vacuum vapor deposition, sputtering, reactive sputtering, dual magnetron sputtering, plasma-enhanced chemical vapor deposition (PECVD), and the like are preferably used for the vacuum deposition. In view of productivity, the vacuum vapor deposition is currently most preferable. As a heating means for the vacuum vapor deposition, it is preferred to use one of electron beam heating, resistive heating and inductive heating.

(Barrier Coating Layer 32c)

The barrier coating layer 32c is a coating layer (gas barrier coating layer) having gas barrier properties, and is provided on the vapor deposition layer 32b. The barrier coating layer 32c may be a layer made of a composition for forming a gas barrier coating layer (hereinafter, also referred to as a coating agent) containing, for example, at least one selected from the group consisting of a hydroxyl group-containing polymer compound, a metal alkoxide, a silane coupling agent, and a hydrolysate thereof.

From the viewpoint of more sufficiently maintaining gas barrier properties after hot water treatment such as retort treatment, the coating agent preferably contains at least a silane coupling agent or a hydrolysate thereof, more preferably at least one selected from the group consisting of a hydroxyl group-containing polymer compound, a metal alkoxide and a hydrolysate thereof and a silane coupling agent or a hydrolysate thereof; and even more preferably a hydroxyl group-containing polymer compound or a hydrolysate thereof, a metal alkoxide or a hydrolysate thereof, and a silane coupling agent or a hydrolysate thereof. The coating agent can be prepared by, for example, adding a metal alkoxide and a silane coupling agent directly or after being subjected to a treatment such as hydrolysis in advance to a solution in which a hydroxyl group-containing polymer compound as a water-soluble polymer is dissolved in an aqueous (water or water/-alcohol mixture) solvent.

The details of the components contained in the coating agent for forming the barrier coating layer 32c will be described. Examples of the hydroxyl group-containing polymer compound used for the coating agent include polyvinyl alcohol, polyvinyl pyrrolidone, starch, methyl cellulose, carboxymethyl cellulose and sodium alginate. Among these, polyvinyl alcohol (PVA) is preferably used for the coating agent of the barrier coating layer 32c due to particularly excellent gas barrier properties.

In order to achieve excellent gas barrier properties, the barrier coating layer 32c is preferably formed from a composition containing at least one selected from the group consisting of a metal alkoxide represented by the following general formula (I) and a hydrolysate thereof.

$$M(OR^1)_m(R^2)_{n-m} \ldots \qquad (I)$$

In general formula (I), $R^1$ and $R^2$ are each independently a monovalent organic group having 1 to 8 carbon atoms, and are preferably an alkyl group such as a methyl group or an ethyl group. M represents an n-valent metal atom such as Si, Ti, Al or Zr. m represents an integer from 1 to n. When a plurality of $R^1$s or $R^2$s are present, the $R^1$s or the $R^2$s may be the same or different.

Specific examples of the metal alkoxide include tetraethoxysilane $[Si(OC_2H_5)_4]$ and triisopropoxyaluminum $[Al(OC_3H_7)_3]$. Tetraethoxysilane and triisopropoxy aluminum are preferred since they are relatively stable in an aqueous solvent after hydrolysis.

Examples of the silane coupling agent include compounds represented by the following general formula (II).

$$Si(OR^{11})_p(R^{12})_{3-p}R^{13} \ldots \qquad (II)$$

In general formula (II), $R^{11}$ represents an alkyl group such as a methyl group or an ethyl group, $R^{12}$ represents a monovalent organic group such as an alkyl group, an aralkyl group, an aryl group, an alkenyl group, an alkyl group substituted with an acryloxy group, or an alkyl group substituted with a methacrylate group, $R^{13}$ represents a monovalent organic functional group, and p represents an integer of 1 to 3. When a plurality of $R^{11}$s or $R^{12}$s are present, the $R^{11}$s or the $R^{12}$s may be the same or different. Examples of the monovalent organic functional group represented by $R^{13}$ include a glycidyloxy group, an epoxy group, a mercapto group, a hydroxyl group, an amino group, an alkyl group substituted with a halogen atom, or a monovalent organic functional group containing an isocyanate group.

Specific examples of the silane coupling agent include vinyltrimethoxysilane, γ-chloropropylmethyldimethoxysilane, γ-chloropropyltrimethoxysilane, glycidoxypropyltrimethoxysilane, γ-methacryloxypropyltrimethoxysilane and γ-methacryloxypropylmethyldimethoxysilane.

The silane coupling agent may be a multimer obtained by polymerizing the compounds represented by general formula (II). The multimer is preferably a trimer, and more preferably 1,3,5-tris (3-trialkoxysilylalkyl) isocyanurate. This is a condensation product of 3-isocyanate alkyl alkoxysilane. It is known that 1,3,5-tris (3-trialkoxysilylalkyl) isocyanurate has no chemical reactivity in the isocyanate moiety, but the reactivity is ensured by the polarity of the isocyanurate moiety. Generally, like 3-isocyanate alkyl alkoxysilane, 1,3,5-tris (3-trialkoxysilylalkyl) isocyanurate is added to an adhesive or the like, and is known as an adhesion-enhancing agent. Therefore, by adding 1,3,5-tris (3-trialkoxysilylalkyl) isocyanurate to the hydroxyl group-containing polymer compound, the water resistance of the gas barrier coating layer can be improved by hydrogen bonding. While 3-isocyanate alkyl alkoxysilane has high reactivity and low liquid stability, the isocyanurate moiety of 1,3,5-tris (3-trialkoxysilylalkyl) isocyanurate is easily dispersed in an aqueous solution and stably maintains the viscosity although it is not water-soluble due to the polarity. Further, the water resistance performance of 3-isocyanate alkyl alkoxysilane is equivalent to that of 1,3,5-tris (3-trialkoxysilylalkyl) isocyanurate.

Some 1,3,5-tris (3-trialkoxysilylalkyl) isocyanurate is produced by thermal condensation of 3-isocyanate propylalkoxysilane, and may contain 3-isocyanate propylalkoxysilane from the base material, but this poses no particular problem. More preferably, the compound is 1,3,5-tris (3-trialkoxysilylpropyl) isocyanurate, and even more preferably 1,3,5-tris (3-trimethoxysilylpropyl) isocyanurate. 1,3,5-tris (3-trimethoxysilylpropyl) isocyanurate is practically advantageous since the methoxy group has a fast hydrolysis rate and compounds containing a propyl group can be obtained at a relatively low cost.

The coating agent may further contain, as necessary, isocyanate compounds or known additives such as a dispersant, a stabilizer, a viscosity modifier and a colorant to such an extent that the gas barrier properties are not impaired.

The barrier coating layer 32c preferably has a thickness of 50 nm to 1,000 nm, and more preferably 100 nm to 500 nm. When the barrier coating layer 32c has the thickness of 50 nm or greater, more sufficient gas barrier properties tend to be achieved, and when the thickness is 1,000 nm or less, sufficient flexibility tends to be maintained.

The coating solution for forming the barrier coating layer 32c can be applied by a coating method such as dipping, roll coating, gravure coating, reverse gravure coating, air knife coating, comma coating, die coating, screen printing, spray coating, gravure offset, or the like. The coating film formed by applying the coating solution can be dried by, for example, hot air drying, hot roll drying, high frequency irradiation, infrared irradiation, UV irradiation, or a combination thereof.

The temperature for drying the coating film may be, for example, 50°C to 150°C, and preferably 70°C to 100°C. A drying temperature within the above range can further suppress occurrence of cracking in the vapor deposition layer 32b and the barrier coating layer 32c, ensuring excellent barrier properties.

The barrier coating layer 32c may be formed using a coating agent containing a polyvinyl alcohol-based resin and a silane compound. The coating agent may further contain, if necessary, an acid catalyst, an alkali catalyst, a photopolymerization initiator, and the like.

The polyvinyl alcohol-based resin is as described above. Further, examples of the silane compound include silane coupling agents, polysilazanes, siloxanes, and the like, and specific examples thereof include tetramethoxy silane, tetraethoxy silane, glycidoxypropyl trimethoxy silane, acryloxypropyl trimethoxy silane, hexamethyldisilazane, and the like.

[Sealant Layer 50]

The sealant layer 50 imparts sealing properties to the laminate 1 due to heat-sealing. The sealant layer 50 may be a polyolefin film as with the first substrate layer 10 from the viewpoint of recyclability of the laminate 1. In the present embodiment, the sealant layer 50 is a resin layer having a single layer structure and containing polypropylene as a main material, but is not limited thereto. The sealant layer 50 may include a polypropylene film or may be formed of a polypropylene film.

The polypropylene film may be an acid-modified polypropylene film obtained by graft-modifying polypropylene with an unsaturated carboxylic acid, an acid anhydride of an unsaturated carboxylic acid, an ester of an unsaturated carboxylic acid, or the like. Examples of the polypropylene that can be used include polypropylene-based resins such as homopolypropylene resins (PP), propylene-ethylene random copolymers, propylene-ethylene block copolymers and propylene-$\alpha$ olefin copolymers.

The polypropylene film constituting the sealant layer 50 is preferably a non-stretched polypropylene film from the viewpoint of further improving sealing properties due to heat-sealing.

Various additives, such as flame retardants, slip agents, anti-blocking agents, antioxidants, photostabilizers, tackifiers and antistatic agents, may be added to the polypropylene film constituting the sealant layer 50.

The thickness of the sealant layer 50 is determined by the mass of the contents, the shape of the packaging bag, and the like, but may generally be 30 $\mu$m to 150 $\mu$m, and preferably 50 $\mu$m to 80 $\mu$m.

When the sealant layer 50 is heated at 128°C for 15 minutes, it thermally expands in the MD and thermally contracts in the TD for reasons that are not clear, making it easier to achieve the opening height of the packaging bag. From the same viewpoint, when the sealant layer 50 is heated at 128°C for 15 minutes, the MD heat shrinkage ratio determined by the above formula (1) is preferably -1.0% or greater, and more preferably -0.5% or greater, and is preferably less than 0%.

When the sealant layer 50 is heated at 128°C for 15 minutes, the TD heat shrinkage ratio determined by the above formula (2) is preferably 0% or greater, and preferably 1.0% or less.

The sealant layer 50 can be laminated by a known method, such as dry lamination in which the film-shaped sealant layer made of the above-mentioned polypropylene is bonded with an adhesive such as an one-part or two-part curing type urethane-based adhesive, non-solvent dry lamination in which the film-shaped sealant layer is bonded with a solventless adhesive, or extrusion lamination in which the above-mentioned polypropylene is heated, melted, extruded in a curtain shape, and bonded.

Among the above lamination methods, dry lamination is preferred since it has high resistance to retort treatment, particularly to high-temperature hot water treatment at 120°C or higher. On the other hand, the lamination method is not particularly limited if the packaging bag is used for applications involving treatment at a temperature of 85°C or lower.

Although the laminate according to one embodiment has been described above, the laminate of the present disclosure should not be limited to the above embodiment. For example, the laminate may further include a print layer.

[Print layer]

The print layer may be provided on, for example, at least one surface of the first substrate layer 10. The print layer is provided at a position where it can be seen from the outside of the laminate 1 for the purpose of displaying information on the contents, identifying the contents, improving the concealing properties, or improving the design of the packaging bag. The printing method and printing ink are not specifically limited, and may be appropriately selected from known printing methods and printing inks in consideration of printability to a film, designability such as tone, adhesion, safety for a food container, and the like. Examples of the printing method include gravure printing, offset printing, gravure offset printing, flexographic printing, ink jet printing, and the like. In particular, gravure printing is preferably used from the viewpoint of productivity and high precision in design.

In order to improve the adhesion of the print layer, the surface of the layer on which the print layer is to be provided may be subjected to various types of pretreatment such as corona treatment, plasma treatment and flame treatment, or may be provided with a coating layer such as an adhesion-enhancement layer.

Further, the laminate of the present disclosure may not necessarily include the anchor coat layer 32a. The laminate of the present disclosure may not necessarily include the barrier coating layer 32c. The lamination order of the second substrate layer 31, the anchor coat layer 32a, the vapor deposition layer 32b and the barrier coating layer 32c may be changed. Further, the laminate of the present disclosure may not necessarily include at least one of the first adhesive layer 20 and the second adhesive layer 40.

<Package>

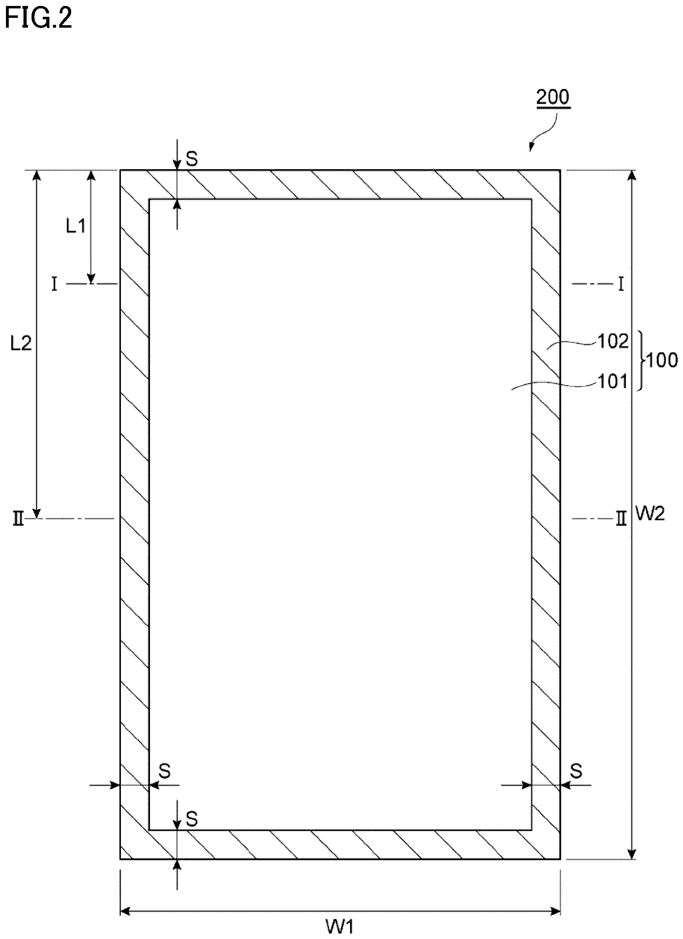

A package according to an embodiment will be described below. Fig. 2 is a schematic plan view of an example of a package according to the present embodiment. A package 200 includes a packaging bag 100 and contents (not shown) contained in the packaging bag.

The packaging bag 100 may be formed by, for example, overlapping two laminates 1 with the sealant layers facing each other, and heat-sealing the four sides.

The packaging bag 100 is a four-sided bag having a main body 101 in which the contents are contained, and a seal portion 102 located at the edges of the main body 101. The shape of the main body 101 is not specifically limited, and may be, for example, rectangular when viewed in a predetermined direction. At least part of the outer surface of the main body 101 may be printed. The main body 101 may contain, for example, a specific gas such as nitrogen in addition to the contents. The seal portion 102 is a portion where a part of the sealant layer 50 and another part of the sealant layer 50 of the laminate 1 are bonded together. In the seal portion 102, a part of the sealant layer 50 and another part of the sealant layer 50 of the laminate 1 are adhered to each other. The seal portion 102 may be formed by, for example, heating and compressing (i.e., heat-sealing) a part of the sealant layer 50 and another part of the sealant layer 50 of the laminate 1, but is not limited thereto. For example, the seal portion 102 may be formed by cold sealing or the like.

In the package 200, the maximum opening heights H1 and H2 measured through the following steps satisfy the following conditions. When the maximum opening heights H1 and H2 satisfy the following conditions, the opening of the package 200 becomes difficult to close when discharging the contents with the opening positioned vertically downward, resulting in excellent dischargeability.

$$4\ \mathrm{mm} \leq H1$$

$$6\ \mathrm{mm} \leq H2$$

(2a) Setting a position 20 mm from an upper end of the packaging bag as a first position and a position at a center in the height direction of the packaging bag as a second position, cutting the packaging bag from one lateral edge to the other lateral edge at the first position, discharging the contents, and measuring the maximum opening height H1 at the first position in a state in which the packaging bag is placed on a horizontal table

(2b) Cutting the packaging bag, after step (2a), from one lateral edge to the other lateral edge at the second position, and measuring the maximum opening height H2 at the second position in a state in which the packaging bag is placed on a horizontal table

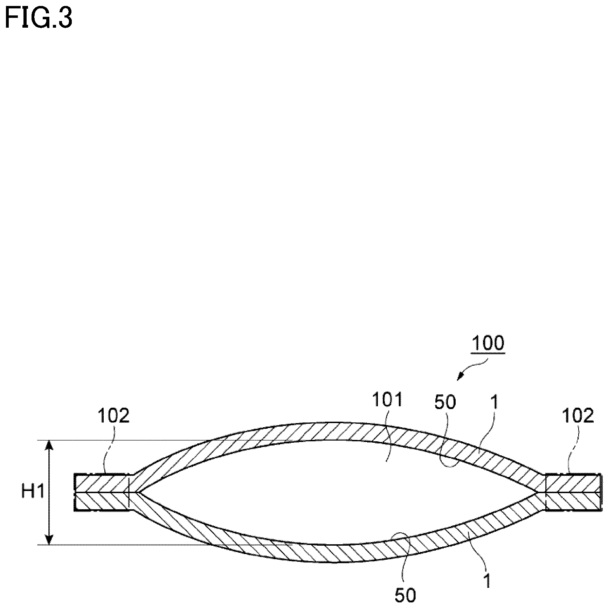

The first position is indicated by the imaginary line I-I in Fig. 2, in which a distance L1 from the upper end is 20 mm. The second position is indicated by the imaginary line II-II in Fig. 2, in which the distances from the upper end and from the lower end are the same 70 mm. Fig. 3 is a cross-sectional view taken along the imaginary line I-I. The maximum opening height H1 is the maximum distance between the inner edges of the sealant layers, as shown in Fig. 3. The same applies to the maximum opening height H2. The numerical ranges of the maximum opening heights H1 and H2 may be the same as the maximum opening heights H1 and H2 of the laminate 1.

A seal width S of the packaging bag 100 may be, for example, 2 mm to 10 mm. A width W1 of the packaging bag 100 may be, for example, 80 mm to 150 mm. A height W2 of the packaging bag 100 may be, for example, 120 mm to 200 mm.

The package 200 may be subjected to heat treatment at 80°C or higher or 120°C or higher, and 135°C or lower. Examples of the heat treatment include retort treatment and boiling treatment.

Retort treatment is a method of sterilizing microorganisms such as mold, yeast, bacteria, and the like by heating and pressurization in order to preserve food, pharmaceuticals, etc. in general. Usually, packaging bags containing food or the like are subjected to heating and pressurization under conditions of 105 to 140°C, 0.15 to 0.30 MPa, and 10 to 120 minutes. Retort devices include steam type that uses heated steam and hot-water type that uses pressurized heated water, which are used as appropriate according to sterilization conditions of the food or the like to be contained. Boiling treatment is a method of moist-heat sterilization for preserving food, pharmaceuticals, etc. Usually, although it depends on the contents, packaging bags containing food or the like are subjected to moist-heat sterilization under conditions of 60 to 100°C under atmospheric pressure for 10 to 120 minutes. Usually, boiling treatment is performed at a temperature of 100°C or lower using a hot-water tank. The boiling treatment includes a batch type method, in which packaging bags are immersed in a hot-water tank at a predetermined temperature and removed after a predetermined time, and a continuous type method, in which packaging bags are passed through a tunnel in a hot-water tank for treatment.

Examples of the contents include foods and pharmaceuticals. Since the packaging bag 100 has excellent dischargeability, the contents may contain water, which is generally difficult to discharge. The water contents may be, for example, 60 mass% or greater, preferably 70 mass% or greater, and more preferably 75 mass% or greater relative to the total amount of the contents. Examples of the contents containing water include prepared foods such as soups and pasta sources, pet foods, and the like.

Although the package according to one embodiment has been described above, the package of the present disclosure should not be limited to the above embodiment. For example, the packaging bag may be a standing pouch-shaped packaging bag, a two-sided bag, a three-sided bag, a back-sealed bag or a gusset bag. The packaging bag may not necessarily have a resealable portion and a notch. The packaging bag may have a notch. The notch may be V-shaped, U-shaped, I-shaped, or the like. Alternatively, perforations may be formed instead of the notch.

Examples

Hereinafter, specific examples of the present disclosure will be described. It should be noted that the present disclosure is not limited to the following examples.

<Preparation of Materials>

The following materials were prepared as the first substrate layer, the second substrate layer, the sealant layer and the adhesive.

[First Substrate Layer]

- OPP1A: Biaxially stretched polypropylene film (20 $\mu$m thickness)
- OPP1B: Biaxially stretched polypropylene film (20 $\mu$m thickness)
- OPP1C: Biaxially stretched polypropylene film (20 $\mu$m thickness)
- PET: Polyethylene terephthalate film (12 $\mu$m thickness)

[Second Substrate Layer]

- OPP2A: Biaxially stretched polypropylene film (20 $\mu$m thickness)
- OPP2B: Biaxially stretched polypropylene film (20 $\mu$m thickness)

(Sealant Layer)

- CPP-A: non-stretched polypropylene film (60 $\mu$m thickness)
- CPP-B: non-stretched polypropylene film (80 $\mu$m thickness)
- CPP-C: non-stretched polypropylene film (60 $\mu$m thickness)
- CPP-D: non-stretched polypropylene film (40 $\mu$m thickness)

· CPP-E: non-stretched polypropylene film (70 μm or 80 μm thickness)

(Adhesive)

· Manufactured by Mitsui Chemicals, Inc., trade name: base resin A525 / curing agent A52

[Preparation of Anchor Coating Agent]

Acrylic polyol and tolylene diisocyanate were mixed so that the number of NCO groups of the tolylene diisocyanate was equivalent to the number of OH groups of the acrylic polyol, and then the mixture was diluted with ethyl acetate so that the total solid content (total amount of acrylic polyol and tolylene diisocyanate) was 5 mass%. Further, β-(3,4-epoxycyclohexyl)trimethoxysilane, in an amount of 5 parts by mass relative to 100 parts by mass of the total amount of acrylic polyol and tolylene diisocyanate, was added to the diluted mixture and mixed to prepare an anchor coating agent.

[Preparation of Coating Solution for Barrier Coating Layer]

The following Solutions A, B and C were mixed at a mass ratio of 65/25/10 to prepare a coating solution for barrier coating layer.

Solution A: Hydrolyzed solution with a solid content of 5 mass% (equivalent to $SiO_2$) obtained by adding 72.1 g of 0.1N hydrochloric acid to 17.9 g of tetraethoxysilane ($Si(OC_2H_5)_4$) and 10 g of methanol, and stirring the mixture for 30 minutes for hydrolysis
Solution B: Water/methanol solution containing 5 mass% of polyvinyl alcohol (water : methanol at a mass ratio of 95:5)
Solution C: Hydrolyzed solution obtained by diluting 1,3,5-tris (3-trialkoxysilylpropyl) isocyanurate with water/isopropyl alcohol mixture solution (water : isopropyl alcohol at a mass ratio of 1:1) to a solid content of 5 mass%

<Production of Gas Barrier Film (Intermediate Layer)>

(Examples 1 to 5, Comparative Examples 1, 2, 5 and 6)

The materials shown in Table 1 were used as the second substrate layer. The composition for forming an anchor coat layer was applied to the corona-treated surface of the second substrate layer by gravure roll coating, dried and cured at 60°C to form an anchor coat layer made of a polyester-based polyurethane resin with a coating amount of 0.1 g/m2.
Then, a 30 nm-thick transparent inorganic oxide layer (silica deposition layer) made of a silicon oxide was formed using an electron beam heating type vapor deposition device. The type of deposition material for forming a silica deposition layer was adjusted to form a vapor deposition layer with an O/Si ratio of 1.8. The O/Si ratio was measured with an X-ray photoelectron spectrometer (manufactured by JEOL Ltd., trade name: JPS-90MXV) using a nonmonochromatic MgKα (1253.6 eV) X-ray source at an X-ray output of 100 W (10 kV-10 mA). Quantitative analysis to determine the O/Si ratio was performed using relative sensitivity factors of 2.28 for O1s and 0.9 for Si2p.
Then, the coating solution for barrier coating layer was applied onto the inorganic oxide layer by gravure roll coating, and heated and dried in an oven under conditions of a tension of 20 N/m and a drying temperature of 120°C to form a 0.3 μm-thick over coat layer. Thus, a gas barrier film having a laminate structure of second substrate layer / anchor coat layer / vapor deposition layer / over coat layer was obtained.

<Production of Laminate>

Based on the combination of layers shown in Table 1, the laminates of the examples and comparative examples were produced. The method of producing the laminate is as follows.

(Examples 1 to 5, Comparative Examples 1, 2, 5 and 6)

The first substrate layer was laminated on the surface of the gas barrier film on the over coat layer side via an adhesive by dry lamination. The sealant layer was laminated similarly on the other surface of the second substrate layer of the gas barrier film. Thus, a laminate having a laminate structure of first substrate layer / adhesive layer / over coat layer / vapor deposition layer / anchor coat layer / second substrate layer / adhesive layer / sealant layer was obtained.

(Comparative Examples 3 and 4)

An AL foil (thickness: 10 $\mu$m, MD heat shrinkage ratio: 0%, TD heat shrinkage ratio: 0%) was prepared. The first substrate layer was laminated on one surface of the AL foil via an adhesive by dry lamination. The sealant layer was laminated similarly on the surface of the AL foil on a side opposite to that on which the first substrate layer is laminated. Thus, a laminate having a laminate structure of first substrate layer / adhesive layer / AL foil layer / adhesive layer / sealant layer was obtained.

<Loop Stiffness Value>

The laminates of the examples and comparative examples were subjected to retort treatment by heating under conditions of a temperature of 128°C, a time of 15 minutes and a pressure of 0.3 MPa. A loop stiffness value of the heated laminate was measured. For the measurement, a loop stiffness tester manufactured by Toyo Seiki Seisaku-sho, Ltd. was used. A test film having a TD of 15 mm and an MD of 200 mm was prepared from the heated laminate. Both ends of the test film were fixed with chucks to form a loop having a loop size of 85 mm $\times$ 15 mm. The loop was compressed with an indenter under conditions of a compression rate of 3.3 mm/min, a compression time of 3 seconds and a compression distance of 20 mm, and the load of the indenter at that time was measured. The maximum value of the load measured in the test was used as the loop stiffness value. The compression distance refers to the distance between the indenter and the chucks when they were closest to each other. Table 2 shows the results.

<Measurement of Maximum Opening Heights H1 and H2>

The maximum opening heights H1 and H2 were measured through the following steps. For the maximum opening height H1, the average of the measured values for three laminates was used. Similarly, for the maximum opening height H2, the average of the measured values for three laminates was used. Table 2 shows the results.
(1a) Preparing two test pieces of the laminate having a width of 90 mm and a length of 140 mm
(1b) Overlapping the two test pieces with the sealant layers facing each other and sealing three sides with a 5 mm seal width to form a bag
(1c) Injecting 70g of water from the upper end of the bag and then sealing the upper end with a 5 mm seal width to obtain a test specimen
(1d) Heating the test specimen under conditions of a temperature of 128°C, a time of 15 minutes and a pressure of 0.3 MPa
(1e) Cutting the bag, after step (1d), from one lateral edge to the other lateral edge at a first position 20 mm from the upper end of the bag, discharging the water, and measuring the maximum opening height H1 at the first position in a state in which the bag is placed on a horizontal table
(1f) Cutting the bag, after step (1e), from one lateral edge to the other lateral edge at a second position 50 mm from the first position, and measuring the maximum opening height H2 at the second position in a state in which the bag is placed on a horizontal table

In step (1b), an impulse sealer was used. In step (1c), after water was injected into the bag, the air inside the bag was expelled while folding the upper part of the bag, and the upper end of the bag was sealed in this state. In step (1d), the test specimen was heated in a state in which the major surface of the test specimen was placed horizontally. Heating was performed by a shower method in which water was sprayed onto the test specimen. In step (1e), after the water was discharged, the inside of the bag was slightly wiped with Kimwipes to remove moisture. Further, before measuring the maximum opening height H1, the bag was placed on a horizontal table and the major surface of the bag was pressed from the lower end toward the upper end with the palm, applying a force of 2 kg to 3 kg. In step (1f), before measuring the maximum opening height H2, the bag was placed on a horizontal table and the major surface of the bag was pressed from the lower end toward the upper end with the palm, applying a force of 2 kg to 3 kg.

<Measurement of Shrinkage Ratios of First Substrate Layer, Second Substrate Layer, Sealant Layer and Laminate>

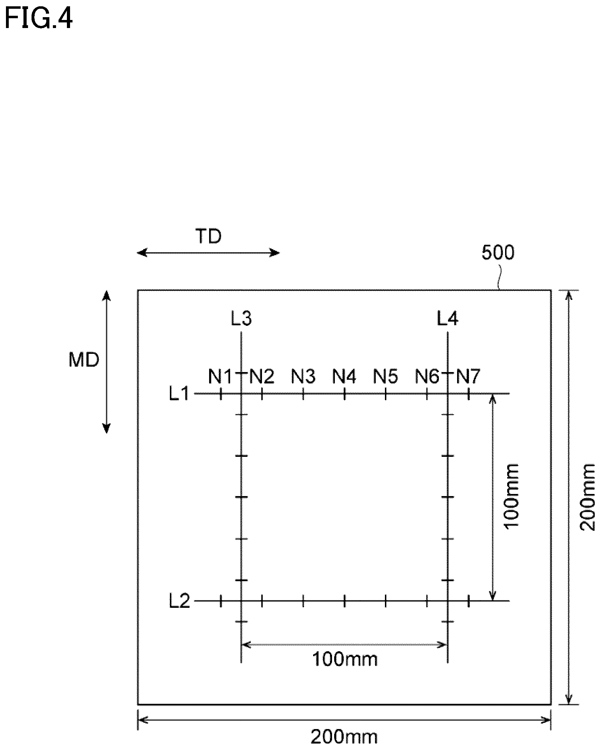

The heat shrinkage ratios of the first substrate layer, the second substrate layer, the sealant layer and the laminate of each of the examples and comparative examples were measured according to the following procedure. Table 1 shows the results.
(1) As shown in Fig. 4, the layer or laminate to be measured was cut into a piece of 200 mm × 200 mm to obtain a measurement sample 500.

(2) As shown in Fig. 4, two straight lines L1 and L2 having a length of 120 mm or greater and parallel to the TD of the measurement sample 500 were drawn at an interval of 100 mm.

(3) As shown in Fig. 4, two straight lines L3 and L4 having a length of 120 mm or greater and parallel to the MD of the measurement sample 500 were drawn at an interval of 100 mm.

(4) As shown in Fig. 4, seven graduations N1 to N7 were drawn at 20 mm intervals on the straight line L1. Graduations were similarly drawn on the straight lines L2 to L4. The graduation positions on the straight lines L1 and L2 were aligned such that the lines connecting the graduations N1 to N7 on the straight line L1 to the graduations N1 to N7 on the straight line L2, respectively, were parallel to the MD. Further, the graduation positions on the straight lines L3 and L4 were aligned such that the lines connecting the graduations N1 to N7 on the straight line L3 to the graduations N1 to N7 on the straight line L4, respectively, were parallel to the TD.

(5) The measurement sample was heated under conditions of 128°C, 15 minutes and 0.3 MPa. After heating, the measurement sample was left at room temperature (25°C) for 30 minutes.

(6) The straight-line distance between the graduation N1 on the straight line L1 (intersection point of L1 and N1) and the graduation N1 on the straight line L2 (intersection point of L2 and N1) was measured, as the MD length, before and after heating, and the MD heat shrinkage ratio was determined by the following formula (1). Similarly, the MD heat shrinkage ratios at respective positions of the graduations N1 to N7 were determined, and the average of these values was taken as the MD heat shrinkage ratio of the measurement sample 500.

MD heat shrinkage ratio (%) = (MD length before heating - MD length after heating) / MD length before heating × 100     (1)

(7) The straight-line distance between the graduation N1 on the straight line L3 (intersection point of L3 and N1) and the graduation N1 on the straight line L4 (intersection point of L4 and N1) was measured, as the TD length, before and after heating, and the TD heat shrinkage ratio was determined by the following formula (2). Similarly, the TD heat shrinkage ratios at respective positions of the graduations N1 to N7 were determined, and the average of these values was taken as the TD heat shrinkage ratio of the measurement sample 500.

TD heat shrinkage ratio (%) = (TD length before heating - TD length after heating) / TD length before heating × 100     (2)

<Dischargeability>

Two test pieces of the laminate having a width of 90 mm and a length of 140 mm were prepared. The two test pieces were overlapped each other with the sealant layers facing each other. Three sides of the test pieces were sealed with an impulse sealer (5 mm seal width) to obtain a packaging bag. Wet pet food (approx. 50 g) was filled from the upper end of the packaging bag. The upper end of the packaging bag was sealed with an impulse sealer (5 mm seal width). Thus, a package including the packaging bag and the contents (wet pet food) was obtained.

The package was heated under conditions of a temperature of 128°C, a time of 15 minutes and a pressure of 0.3 MPa. Heating was preformed by a shower method in which water was sprayed onto the package. After heating, the packaging bag was cut from one lateral edge to the other lateral edge at a first position 20 mm from the upper end of the packaging bag to form an opening. The maximum opening height of the opening was measured. The packaging bag was held with the opening vertically downward for 30 seconds to discharge the contents. After a lapse of 15 seconds, both ends of the packaging bag were pinched with both hands and pressed toward the inside of the packaging bag. The amount of the contents discharged in 30 seconds was measured. The discharge ratio was calculated by the following formula.

$$\text{Discharge ratio (\%)} = \text{amount of discharged contents (g)} / \text{filled amount of contents (g)} \times 100$$

The maximum opening height of the opening and the discharge ratio were evaluated according to the following criteria. Table 2 shows the results.

(Criteria)

A: Maximum opening height was over 25 mm and discharge ratio was over 90%

B: Maximum opening height was 20 mm or greater and less than 25 mm and discharge ratio was over 90%
C: Other than A and B grades

<Handling Properties When Packaging Bag is Opened>

Two test pieces of the laminate having a width of 90 mm and a length of 140 mm were prepared. The two test pieces were overlapped each other with the sealant layers facing each other. Three sides of the test pieces were sealed with an impulse sealer (5 mm seal width) to obtain a packaging bag. Wet pet food (approx. 50 g) was filled from the upper end of the packaging bag. The upper end of the packaging bag was sealed with an impulse sealer (5 mm seal width). Thus, a package including the packaging bag and the contents (wet pet food) was obtained.
The package was heated under conditions of a temperature of 128°C, a time of 15 minutes and a pressure of 0.3 MPa. Heating was preformed by a shower method in which water was sprayed onto the package. After heating, the packaging bag was cut from one lateral edge to the other lateral edge at a first position 20 mm from the upper end of the packaging bag to form an opening. The handling properties when the packaging bag was opened were evaluated by evaluating the degree of force required when pinching the seal portions on both ends of the package and pressing them toward each other and the ease of maintaining the shape of the opening according to the following criteria A to D. The evaluation was performed according to the following criteria. Table 2 shows the results.

(Criteria)

A: Opening was opened with light force and easy to maintain
B: Opening was easy to open and easy to maintain
C: Packaging bag was hard and difficult to open, but opening was easy to maintain
D: Opening was distorted (twisted) and difficult to open, and opening was difficult to maintain

[Table 1]

| | First substrate layer | | | | Second substrate layer | | | | Sealant layer | | | |
|---|---|---|---|---|---|---|---|---|---|---|---|---|
| | Material | Thickness [μm] | Heat shrinkage ratio [%] | | Material | Thickness [μm] | Heat shrinkage ratio [%] | | Material | Thickness [μm] | Heat shrinkage ratio [%] | |
| | | | MD | TD | | | MD | TD | | | MD | TD |
| Example 1 | OPP1A | 20 | 4.7 | 2.6 | OPP2A | 20 | 3.9 | 2.1 | CPP-A | 60 | -0.45 | 0.75 |
| Example 2 | OPP1A | 20 | 4.7 | 2.6 | OPP2A | 20 | 3.9 | 2.1 | CPP-B | 80 | -0.20 | 0.55 |
| Example 3 | OPP1A | 20 | 4.7 | 2.6 | OPP2A | 20 | 3.9 | 2.1 | CPP-C | 60 | 0.81 | 0.56 |
| Example 4 | OPP1A | 20 | 4.7 | 2.6 | OPP2B | 20 | 2.6 | 0.1 | CPP-C | 60 | 0.81 | 0.56 |
| Comparative example 1 | OPP1B | 20 | 2.6 | 0.1 | OPP2B | 20 | 2.6 | 0.1 | CPP-C | 60 | 0.81 | 0.56 |
| Comparative example 2 | OPP1B | 20 | 2.6 | 0.1 | OPP2B | 20 | 2.6 | 0.1 | CPP-D | 40 | 0.15 | 1.01 |
| Comparative example 3 | PET | 12 | 1.5 | 0.1 | - | - | - | - | CPP-E | 80 | 0.18 | 0.37 |
| Comparative example 4 | PET | 12 | 1.5 | 0.1 | - | - | - | - | CPP-E | 70 | 0.20 | 0.40 |
| Comparative example 5 | OPP1C | 20 | 5.1 | 4.2 | OPP2A | 20 | 3.9 | 2.1 | CPP-D | 40 | 0.15 | 1.01 |
| Comparative example 6 | OPP1C | 20 | 5.1 | 4.2 | OPP2A | 20 | 3.9 | 2.1 | CPP-B | 80 | -0.2 | 0.55 |
| Example 5 | OPP1C | 20 | 5.1 | 4.2 | OPP2A | 20 | 3.9 | 2.1 | CPP-C | 60 | 0.81 | 0.56 |

EP 4 748 570 A1

[Table 2]

| | Maximum opening height [mm] | | Loop stiffness value after retort treatment [mN] | Heat shrinkage ratio of laminate | | Dischargeability | | | Handling properties when packaging bag is opened |
|---|---|---|---|---|---|---|---|---|---|
| | H1 | H2 | MD | MD | TD | Discharge ratio | Maximum opening height when contents are contained [mm] | Evaluation | |
| Example 1 | 5.3 | 6.3 | 94.4 | 2.7% | 2.6% | 93.7% | 33 | A | A |
| Example 2 | 4.7 | 7.8 | 123.9 | 2.6% | 2.7% | 92.8% | 34 | A | B |
| Example 3 | 4.5 | 6.7 | 90.0 | 1.8% | 1.8% | 93.0% | 27 | A | A |
| Example 4 | 4.2 | 6.2 | 113.0 | 1.5% | 1.3% | 91.2% | 23 | B | A |
| Comparative example 1 | 4.1 | 5.4 | 114.5 | 1.2% | 1.0% | 89.6% | 18 | C | B |
| Comparative example 2 | 3.3 | 4.2 | 55.0 | 1.0% | 0.1% | 74.7% | 5 | C | D |
| Comparative example 3 | 3.5 | 5.0 | 116.3 | 0.1% | 0.0% | 85.5% | 7.5 | C | B |
| Comparative example 4 | 5.0 | 4.5 | 74.1 | 0.1% | 0.0% | 88.7% | 8 | C | D |
| Comparative example 5 | 6.7 | 8.5 | 64.0 | 4.2% | 4.1% | 96.4% | 38 | A | D |
| Comparative example 6 | 6.3 | 8.2 | 225.0 | 3.3% | 3.1% | 95.8% | 35 | A | C |
| Example 5 | 6.5 | 8.4 | 162.0 | 3.5% | 3.3% | 96.0% | 36 | A | B |

[Reference Signs List]

1      Laminate,
30    Intermediate layer,
50    Sealant layer,
100   Packaging bag,
200   Package.

**Claims**

1.  A laminate having a laminate structure comprising: a substrate layer;

an intermediate layer; and
a sealant layer, laminated in this order, wherein
maximum opening heights H1 and H2 measured through the following steps satisfy the following conditions:

$$4\,\text{mm} \leq \text{H1}$$

$$6 \text{ mm} \le H2$$

the maximum opening heights H1 and H2 being measured through the following steps:

(1a) preparing two test pieces of the laminate having a width of 90 mm and a length of 140 mm;
(1b) overlapping the two test pieces with the sealant layers facing each other and sealing three sides with a 5 mm seal width to form a bag;
(1c) injecting 70 g of water from an upper end of the bag and then sealing the upper end with a 5 mm seal width to obtain a test specimen;
(1d) heating the test specimen under conditions of a temperature of 128°C, a time of 15 minutes and a pressure of 0.3 MPa;
(1e) cutting the bag, after step (1d), from one lateral edge to the other lateral edge at a first position 20 mm from the upper end of the bag, discharging the water, and measuring the maximum opening height H1 at the first position in a state in which the bag is placed on a horizontal table; and
(1f) cutting the bag, after step (1e), from one lateral edge to the other lateral edge at a second position 50 mm from the first position, and measuring the maximum opening height H2 at the second position in a state in which the bag is placed on a horizontal table, and
a loop stiffness value after the laminate is heated at 128°C for 15 minutes is 80 mN or greater and 220 mN or less.

2. The laminate according to claim 1, wherein
when heated at 128°C for 15 minutes, an MD heat shrinkage ratio determined by the following formula (1) is 1.0% or greater and 3.0% or less, and a TD heat shrinkage ratio determined by the following formula (2) is 1.0% or greater and 3.0% or less:

MD heat shrinkage ratio (%) = (MD length before heating - MD length after heating) / MD length before heating $\times$ 100　　　　(1)

TD heat shrinkage ratio (%) = (TD length before heating - TD length after heating) / TD length before heating $\times$ 100　　　　(2)

3. The laminate according to claim 1, wherein
when heated at 128°C for 15 minutes, the sealant layer thermally expands in the MD and thermally contracts in the TD.

4. The laminate according to claim 1, wherein
when an MD heat shrinkage ratio determined by the following formula (1) and a TD heat shrinkage ratio determined by the following formula (2), after the substrate layer is heated at 128°C for 15 minutes, are $S1_{MD}$ and $S1_{TD}$, respectively, a difference ($S1_{MD}$ - $S1_{TD}$) between $S1_{MD}$ and $S1_{TD}$ is greater than 0% and 5% or less:

MD heat shrinkage ratio (%) = (MD length before heating - MD length after heating) / MD length before heating $\times$ 100　　　　(1)

TD heat shrinkage ratio (%) = (TD length before heating - TD length after heating) / TD length before heating $\times$ 100　　　　(2)

5. The laminate according to claim 1, wherein
the intermediate layer has a second substrate layer, and when an MD heat shrinkage ratio determined by the following formula (1) and a TD heat shrinkage ratio determined by the following formula (2), after the second substrate layer is heated at 128°C for 15 minutes, are $S2_{MD}$ and $S2_{TD}$, respectively, a difference ($S2_{MD}$ - $S2_{TD}$) between $S2_{MD}$ and $S2_{TD}$ is greater than 0% and 5% or less:

MD heat shrinkage ratio (%) = (MD length before heating - MD length after heating) / MD length before heating $\times$ 100　　　　(1)

TD heat shrinkage ratio (%) = (TD length before heating - TD length after heating) / TD length before heating $\times$ 100

(2)

6. The laminate according to claim 1, wherein
the maximum opening heights H1 and H2 satisfy the following conditions:

$$4 \text{ mm} \leq H1 \leq 7 \text{ mm}$$

$$6 \text{ mm} \leq H2 \leq 9 \text{ mm}$$

7. The laminate according to claim 1, wherein

the substrate layer, the intermediate layer and the sealant layer each contain a polypropylene-based resin, and a total mass content of the polypropylene-based resin in the laminate is 90 mass% or greater.

8. A packaging bag produced using the laminate according to any one of claims 1 to 7.

9. The packaging bag according to claim 8, which is used for applications requiring heat treatment at 120°C or higher.

10. A package comprising:

a packaging bag; and
contents contained in the packaging bag, wherein
the packaging bag is formed using a laminate,
the laminate having a laminate structure including a substrate layer, an intermediate layer and a sealant layer, laminated in this order, and
maximum opening heights H1 and H2 measured through the following steps satisfy the following conditions:

$$4 \text{ mm} \leq H1$$

$$6 \text{ mm} \leq H2$$

the maximum opening heights H1 and H2 being measured through the following steps:

(2a) setting a position 20 mm from an upper end of the packaging bag as a first position and a position at a center in the height direction of the packaging bag as a second position, cutting the packaging bag from one lateral edge to the other lateral edge at the first position, discharging the contents, and measuring the maximum opening height H1 at the first position in a state in which the packaging bag is placed on a horizontal table; and
(2b) cutting the packaging bag, after step (2a), from one lateral edge to the other lateral edge at the second position, and measuring the maximum opening height H2 at the second position in a state in which the packaging bag is placed on a horizontal table, and
a loop stiffness value after the laminate is heated at 128°C for 15 minutes is 80 mN or greater and 220 mN or less.

FIG.1

FIG.2

# FIG.3

# FIG.4

## INTERNATIONAL SEARCH REPORT

| | International application No. |
|---|---|
| | **PCT/JP2024/025959** |

| A. | CLASSIFICATION OF SUBJECT MATTER |
|---|---|

***B32B 27/32***(2006.01)i; ***B65D 30/02***(2006.01)i; ***B65D 65/40***(2006.01)i; ***B65D 81/24***(2006.01)i
FI:   B32B27/32 102; B65D30/02; B65D65/40 A; B65D81/24 M

According to International Patent Classification (IPC) or to both national classification and IPC

| B. | FIELDS SEARCHED |
|---|---|

Minimum documentation searched (classification system followed by classification symbols)

B32B1/00-43/00; B65D30/02; B65D65/40; B65D81/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-20391 A (TOPPAN PRINTING CO., LTD.) 18 February 2021 (2021-02-18) claims, examples | 1, 3, 6-10 |
| A | JP 2023-40683 A (TOYOBO CO., LTD.) 23 March 2023 (2023-03-23) entire text | 1-10 |
| A | JP 2014-141302 A (DAI NIPPON PRINTING CO., LTD.) 07 August 2014 (2014-08-07) entire text | 1-10 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 October 2024** | **15 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/025959**

| Patent document cited in search report | | | Publication date (day/month/year) | Patent family member(s) | | | Publication date (day/month/year) |
|---|---|---|---|---|---|---|---|
| JP | 2021-20391 | A | 18 February 2021 | US | 2022/0153006 | A1 | |
| | | | | examples, claims | | | |
| | | | | WO | 2021/020400 | A1 | |
| | | | | EP | 4005791 | A1 | |
| | | | | EP | 4234242 | A2 | |
| | | | | CN | 114126974 | A | |
| | | | | JP | 2022-113738 | A | |
| | | | | JP | 2023-63305 | A | |
| | | | | JP | 2024-86792 | A | |
| JP | 2023-40683 | A | 23 March 2023 | WO | 2023/037917 | A1 | |
| | | | | TW | 202327864 | A | |
| | | | | CN | 117980140 | A | |
| | | | | KR | 10-2024-0064670 | A | |
| JP | 2014-141302 | A | 07 August 2014 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017178357 A